# EUROPÄISCHE PATENTSCHRIFT

(11) **EP 4 449 852 B1**
(45) Veröffentlichungstag und Bekanntmachung des Hinweises auf die Patenterteilung: **05.08.2026**
(21) Anmeldenummer: 24165066.2
(22) Anmeldetag: 21.03.2024
(51) Int. Cl.: A01D 69/03, A01B 63/10

(54) **LANDWIRTSCHAFTLICHES ARBEITSGERÄT**
AGRICULTURAL WORKING DEVICE
OUTIL AGRICOLE

(30) Priorität: 31.03.2023 DE 102023108337
(43) Veröffentlichungstag der Anmeldung: 23.10.2024
(73) Patentinhaber: CLAAS Saulgau GmbH, 88348 Bad Saulgau (DE)
(72) Erfinder: Ober, Martin, 78736 Epfendorf-Trichtingen (DE); Eisele, Dominik, 88512 Mengen-Beuren (DE)

(56) Entgegenhaltungen:
- DE-A1- 3 620 303
- US-A- 4 308 713
- US-A- 4 495 754
- US-A1- 2008 245 043

## Beschreibung

Die Erfindung betrifft ein landwirtschaftliches Arbeitsgerät nach dem Obergriff des Anspruchs 1.

Landwirtschaftliche Arbeitsgeräte, wie zum Beispiel Mähwerke, sind an ein landwirtschaftliches Trägerfahrzeug bzw. Zugfahrzeug, wie beispielsweise an einen Traktor, ankoppelbar. Ein landwirtschaftliches Arbeitsgerät verfügt dabei über mindestens einen hydraulischen Leistungsabnehmer, insbesondere einen hydraulischen Antrieb, wobei der mindestens eine hydraulische Leistungsabnehmer ausgehend vom Trägerfahrzeug oder Zugfahrzeug mit Hydrauliköl versorgbar ist, nämlich über hydraulische Anschlüsse des landwirtschaftlichen Arbeitsgeräts, die an hydraulische Anschlüsse des Trägerfahrzeugs bzw. Zugfahrzeugs ankoppelbar sind.

Es hat sich herausgestellt, dass das Hydrauliköl, welches bei landwirtschaftlichen Arbeitsgeräten zur Übertragung von Antriebsenergie verwendet wird, häufig eine zu hohe Temperatur erreicht, was bis zu einer Überhitzung des Hydrauliköls führen kann. Um eine Überhitzung des Hydrauliköls bei einem landwirtschaftlichen Arbeitsgerät zu vermeiden, ist es bereits bekannt, am landwirtschaftlichen Zugfahrzeug oder Trägerfahrzeug eine aufwendigere Bordhydraulik zu verbauen. Dies verursacht jedoch zusätzliche Kosten und zusätzliches Gewicht sowie erhöhten Wartungsaufwand.

Um eine Überhitzung des Hydrauliköls im Bereich des landwirtschaftlichen Arbeitsgeräts zu vermeiden und um auf eine aufwendige Bordhydraulik am landwirtschaftlichen Trägerfahrzeug oder Zugfahrzeug zu verzichten, ist es aus der EP 1 854 345 B1 bereits bekannt, dass ein landwirtschaftliches Arbeitsgerät ein Kühlsystem aufweisen kann. So offenbart die EP 1 854 345 B1 ein Kühlsystem für einen hydraulischen Antrieb eines landwirtschaftlichen Arbeitsgeräts zur Kühlung einer hydraulischen Flüssigkeit. Die Wärmeenergie der zu kühlenden hydraulischen Flüssigkeit wird dabei an einen Erntegutstrom abgegeben.

Aus US 2008/245043 A1 ist eine Rotationsschneidvorrichtung mit integriertem Kühlsystem bekannt, die an ein selbstfahrendes Fahrzeug, wie einen Lader oder einen Bagger angekoppelt ist. Das Kühlsystem ist in hydraulische Rücklaufleitungen integriert und ein Ölkühler ist auf einen Druck von etwa 14 Bar ausgelegt.

Dann, wenn das landwirtschaftliche Arbeitsgerät ein Kühlsystem aufweist, welches über die hydraulischen Anschlüsse des landwirtschaftlichen Arbeitsgeräts an die hydraulischen Anschlüsse des landwirtschaftlichen Trägerfahrzeugs oder Zugfahrzeugs angebunden werden kann, kann es zum Beispiel infolge eines Bedienfehlers oder einer Fehlfunktion zu einem Überdruck im Kühlsystem kommen, so dass es zum Bersten des Kühlsystems kommen kann. In diesem Fall kann dann aus dem Kühlsystem des landwirtschaftlichen Arbeitsgeräts Hydrauliköl auf die Straße oder das Feld laufen.

Es besteht Bedarf an einem landwirtschaftlichen Arbeitsgerät, bei welchem Undichtigkeiten im Bereich des Kühlsystems vermieden werden können, bei welchem also keine Gefahr besteht, dass Hydrauliköl zum Beispiel infolge eines durch einen Bedienfehler oder eine Fehlfunktion verursachten Berstens des Kühlsystems des landwirtschaftlichen Arbeitsgeräts auf die Straße oder das Feld läuft.

Hiervon ausgehend liegt der vorliegenden Erfindung die Aufgabe zugrunde, ein neuartiges landwirtschaftliches Arbeitsgerät zu schaffen.

Diese Aufgabe wird durch ein landwirtschaftliches Arbeitsgerät nach Patentanspruch 1 gelöst.

Erfindungsgemäß sind zumindest ölführende Baugruppen des Kühlsystems bis wenigstens 200 bar druckfest. So kann vermieden werden, dass zum Beispiel infolge eines Bedienfehlers oder einer Fehlfunktion das Kühlsystem des landwirtschaftlichen Arbeitsgeräts berstet. Es besteht keine Gefahr, dass Hydrauliköl auf die Straße oder das Feld läuft.

Vorzugsweise weist das Kühlsystem einen in einem Kühlmittelbehälter angeordneten Rohrleitungswärmetauscher auf, dessen mindestens eine von Öl durchströmte Rohrleitung bis wenigstens 200 bar druckfest ist, und dessen mindestens eine von Öl durchströmte Rohrleitung von Kühlmittel, welches den Kühlmittelbehälter durchströmt, umströmt ist. Dies ist besonders bevorzugt, um einerseits eine effektive Kühlung des Öls im Bereich des Kühlsystems des landwirtschaftlichen Arbeitsgeräts bereitzustellen und andererseits zu verhindern, dass zum Beispiel ein Bedienfehler oder eine Fehlfunktion zu einem Defekt am Kühlsystem führt.

Vorzugsweise ist die mindestens eine Rohrleitung des Rohrleitungswärmetauschers wendelartig oder spiralartig ausgebildet. Dies erlaubt eine besonders effektive Kühlung des Öls.

Vorzugsweise ist vorgesehen, dass sich durch mindestens eine Wand des Kühlmittelbehälters mindestens ein Zulauf für Öl und mindestens ein Ablauf für Öl erstreckt, wobei über den mindestens einen Zulauf dem im Kühlmittelbehälter angeordneten Rohrleitungswärmetauscher zu kühlendes Öl zuführbar ist, und wobei über den mindestens einen Ablauf von dem im Kühlmittelbehälter angeordneten Rohrleitungswärmetauscher gekühltes Öl abführbar ist. Dies erlaubt eine besonders effektive Kühlung des Öls.

Vorzugsweise weist das Kühlsystem einen Kühler für das Kühlmittel auf, wobei über einen Vorlauf Kühlmittel aus dem Kühlmittelbehälter entnehmbar und dem Kühler zuführbar ist, und wobei über einen Rücklauflauf Kühlmittel ausgehend vom Kühler dem Kühlmittelbehälter zuführbar ist. Über den Kühler des Kühlsystems kann das Kühlmittel, welches die Wärmeenergie vom Öl aufnimmt und das Öl kühlt, effektiv gegen die Umgebung zurückgekühlt werden.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, an Hand der Zeichnung näher erläutert. Dabei zeigt:
- Fig. 1: eine perspektivische Ansicht eines landwirtschaftlichen Arbeitsgeräts zusammen mit einem landwirtschaftlichen Trägerfahrzeug bzw. Zugfahrzeug;
- Fig. 2: eine perspektivische Ansicht des landwirtschaftlichen Arbeitsgeräts; und
- Fig. 3: eine perspektivische Ansicht eines Kühlsystems des landwirtschaftlichen Arbeitsgeräts.

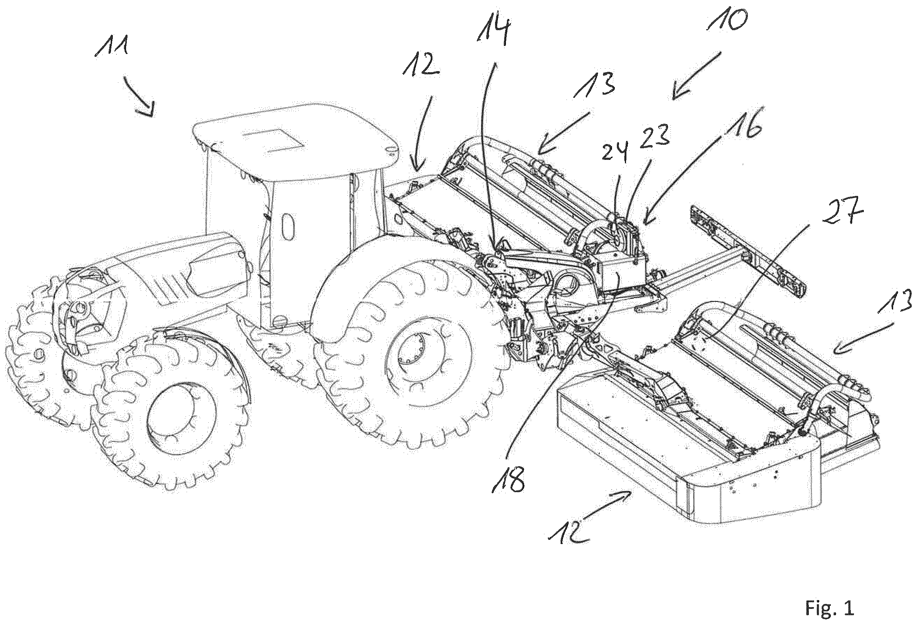

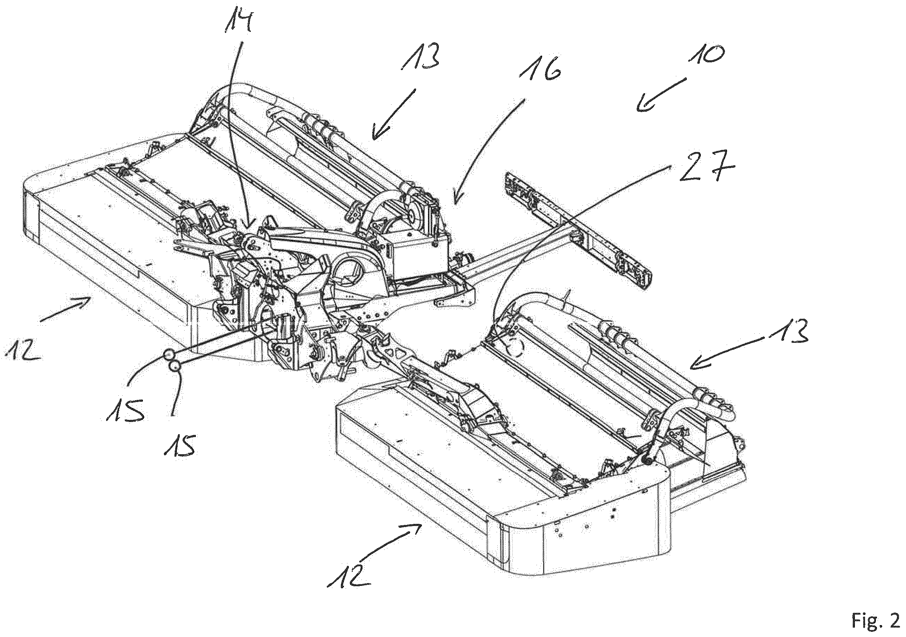

Fig. 1 zeigt eine perspektivische Ansicht eines als Mähwerk ausgebildeten, landwirtschaftlichen Arbeitsgeräts 10, welches in Fig. 1 an ein landwirtschaftliches Trägerfahrzeug 11 bzw. landwirtschaftliches Zugfahrzeug gekoppelt ist. Fig. 2 zeigt das landwirtschaftliche Arbeitsgerät 10 in Alleindarstellung.

Im gezeigten Ausführungsbeispiel verfügt das als Mähwerk ausgebildete landwirtschaftliche Arbeitsgerät 10 über zwei Mäheinheiten 12, wobei mit jeder Mäheinheit 12 ein als Bandförderer ausgebildeter Querförderer 13 zusammenwirkt. Erntegut, welches im Bereich einer Mäheinheit 12 von einem zu bearbeitenden Untergrund abgetrennt wird, gelangt ausgehend von der jeweiligen Mäheinheit 12 in den Bereich des jeweiligen Querförderers 13 und wird vom jeweiligen Querförderer 13 quer zur Fahrtrichtung des landwirtschaftlichen Trägerfahrzeugs 11 vorzugsweise nach innen unter Ausbildung eines Schwads gefördert. Die Querförderer 13 verfügen über als hydraulische Antriebe ausgebildete hydraulische Leistungsabnehmer 27.

Wie bereits ausgeführt, ist das landwirtschaftliche Arbeitsgerät, welches in Fig. 1 und 2 als Mähwerk ausgebildet ist, an das landwirtschaftliche Trägerfahrzeug 11 ankoppelbar. So zeigen Fig. 1 und 2 eine Anhängevorrichtung 14, über welche das landwirtschaftliche Arbeitsgerät 10 mechanisch an das landwirtschaftliche Trägerfahrzeug 11 angebunden werden kann.

Fig. 2 zeigen weiterhin hydraulische Anschlüsse 15. Über die hydraulischen Anschlüsse 15 ist das landwirtschaftliche Arbeitsgerät 10 an ein Hydrauliksystem des Trägerfahrzeugs 11 ankoppelbar, um ausgehend vom Trägerfahrzeug 11 mit Hydrauliköl versorgt zu werden. Dieses Hydrauliköl wird zum Beispiel von den hydraulischen Antrieben benötigt. Bei den hydraulischen Antrieben der Querförderer 13 handelt es sich um hydraulische Leistungsabnehmer 27 des landwirtschaftlichen Arbeitsgeräts 10.

Bereits an dieser Stelle sei drauf hingewiesen, dass die Erfindung auch im Zusammenhang mit anderen landwirtschaftlichen Arbeitsgeräten genutzt werden kann. Auch an anderen landwirtschaftlichen Arbeitsgeräten sind hydraulische Leistungsabnehmer verbaut, die ausgehend vom Hydrauliksystem des landwirtschaftlichen Trägerfahrzeugs 11 mit Hydrauliköl versorgt werden.

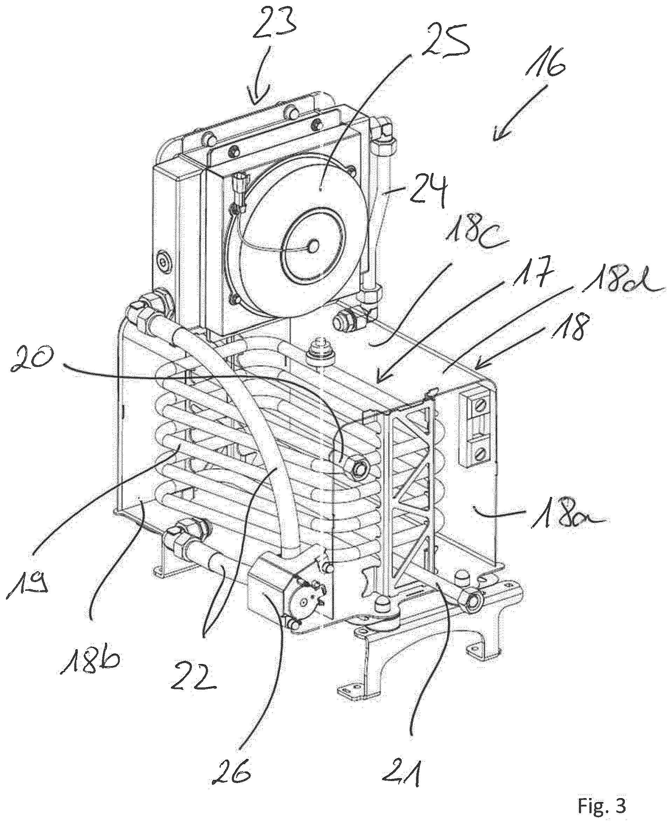

Das erfindungsgemäße landwirtschaftliche Arbeitsgerät 10, bei welchem es sich in Fig. 1 und 2 um ein Mähwerk handelt, verfügt über ein Kühlsystem 16 zur Kühlung des Hydrauliköls, um eine Überhitzung des Hydrauliköls am landwirtschaftlichen Arbeitsgerät 10 zu vermeiden. Fig. 3 zeigt Kühlsystem 16 in Alleindarstellung in perspektivischer Ansicht.

Erfindungsgemäß sind zumindest ölführende Baugruppen des Kühlsystems 16 bis wenigstens 200 bar druckfest. Es besteht dann keine Gefahr, dass es zum Beispiel infolge einer Fehlfunktion oder Fehlbedienung, insbesondere dann, wenn die Hydraulikanschlüsse 15 des landwirtschaftlichen Arbeitsgeräts falsch an entsprechenden Hydraulikanschlüssen des landwirtschaftlichen Trägerfahrzeugs 11 angeschlossen werden, zu einer Leckage am Kühlsystem 16 kommt. So kann vermieden werden, dass Öl in Richtung auf die Straße oder das Feld läuft.

Das Kühlsystem 16 verfügt über einen Rohrleitungswärmetauscher 17, der in einem Kühlmittelbehälter 18 angeordnet ist. Der Rohrleitungswärmetauscher 17 weist mindestens eine von Öl durchströmte Rohrleitung 19 auf, wobei diese von Öl durchströmte Rohrleitung 19 des Rohrleitungswärmetauschers 17 bis wenigstens 200 bar druckfest ist. Die mindestens eine von Öl durchströmte Rohrleitung 19 des Rohrleitungswärmetauschers 17 ist von Öl durchströmt und von Kühlmittel umströmt, wobei das Kühlmittel den Kühlmittelbehälter 18 durchströmt.

In Fig. 3 ist die gezeigte Rohrleitung 19 des Rohrleitungswärmetauschers 17 wendelartig ausgebildet. Im Kühlmittelbehälter 18 können mehrere derartige wendelartige Rohrleitungen 19 nebeneinander angeordnet und in Reihe oder auch parallel zueinander geschaltet sein.

Der Kühlmittelbehälter 18, in welchem der Rohrleitungswärmetauscher 17 angeordnet ist, verfügt über mehrere Wände. In Fig. 3 erstreckt sich durch eine Wand 18a des Kühlmittelbehälters 18 sowohl ein Zulauf 20 für Öl als auch ein Ablauf 21 für Öl. Über den Zulauf 20 kann dem im Kühlmittelbehälter 18 angeordneten Rohrleitungswärmetauscher 17 zu kühlendes Öl zugeführt werden. Gekühltes Öl, welches den Rohrleitungswärmetauscher 17 durchströmt hat, kann über den Ablauf 21 von dem im Kühlmittelbehälter 18 angeordneten Rohrleitungswärmetauscher 17 abgeführt werden.

Insbesondere dann, wenn mehrere Rohrleitungswärmetauscher 17 parallel zueinander verschaltet im Kühlmittelbehälter 18 angeordnet sind, können sich durch die Wand 18a mehrere Zuläufe 20 und mehrere Abläufe 21 erstrecken.

Wie bereits ausgeführt, ist der Kühlmittelbehälter 18 von Kühlmittel durchströmt. An einer Wand 18b des Kühlmittelbehälters 18 zweigt ein Vorlauf 22 ab, über welchen Kühlmittel aus dem Kühlmittelbehälter 18 abgeführt und in Richtung auf einen Kühler 23 geführt werden kann. An einer gegenüberliegenden Wandung 18c mündet ein Rücklauf 24 in den Kühlmittelbehälter 18, um Kühlmittel ausgehend vom Kühler 23 dem Kühlmittelbehälter 18 zuzuführen. In den sich zwischen dem Kühlmittelbehälter 18 und dem Kühler 23 erstreckenden Vorlauf 22 ist eine Kühlmittelpumpe 26 integriert.

Der Kühler 23 dient dazu, das Kühlmittel, welches im Bereich des Rohrleitungswärmetauschers 17 Wärmeenergie vom Öl aufnimmt, gegen Umgebungsluft zu kühlen, um so die vom Kühlmittel aufgenommene Wärmeenergie an die Umgebung zu übertragen und gekühltes Kühlmittel in den Kühlkreislauf zurückzuführen, nämlich zur Durchströmung des Kühlmittelbehälters 18 und zur Umströmung des Rohrleitungswärmetauschers 17, der im Kühlmittelbehälter 18 aufgenommen ist. Der Kühler 23 ist an einer Wandung 18d des Kühlmittelbehälters 18 verbaut.

Der Kühler 23 ist als Luftwärmetauscher ausgebildet, derselbe kühlt das Kühlmittel demnach gegen Umgebungsluft. Dem Kühler 23 ist dabei einen Ventilator 25 zugeordnet, um zur Kühlung des Kühlmittels Umgebungsluft durch den Kühler 23 zu fördern.

Das Kühlsystem 16 des erfindungsgemäßen landwirtschaftlichen Arbeitsgeräts 10 benötigt wenig Bauraum, kann daher vorteilhaft am landwirtschaftlichen Arbeitsgerät 10 verbaut werden. Es erlaubt eine effektive Kühlung des Hydrauliköls und verhindert infolge der druckfesten Ausführung ölführender Baugruppen des Kühlsystems 16, dass das Kühlsystem 16 zum Beispiel infolge einer Fehlbedienung oder einer Fehlfunktion berstet und so Öl auf die Straße oder ein Feld gelangen kann.

Die Kühlung des Hydrauliköls erfolgt vorteilhaft dadurch, dass das Hydrauliköl durch mindestens eine druckfeste Rohrleitung 19 eines Rohrleitungswärmetauschers 17 strömt, der im Kühlmittelbehälter 18 angeordnet ist, wobei die von Öl durchströmte Rohrleitung 19 des Rohrleitungswärmetauschers 17 von Kühlmittel umströmt ist.

Kühlmittel, welches die mindestens eine Rohrleitung 19 des Rohrleitungswärmetauschers 17 umströmt, durchströmt den Kühlmittelbehälter 18 und ist ausgehend vom Kühlmittelbehälter 18 dem Kühler 23 zuführbar, um im Bereich des Kühlers 23 gegen Umgebungsluft zurückgekühlt zu werden.

### Bezugszeichenliste

- 10: landwirtschaftliches Arbeitsgerät
- 11: landwirtschaftliches Trägerfahrzeug
- 12: Mäheinheit
- 13: Querförderer
- 14: Anhängevorrichtung
- 15: hydraulischer Anschluss
- 16: Kühlsystem
- 17: Rohrleitungswärmetauschers
- 18: Kühlmittelbehälter
- 18a: Wand
- 18b: Wand
- 18c: Wand
- 18d: Wand
- 19: Rohrleitung
- 20: Zulauf
- 21: Ablauf
- 22: Vorlauf
- 23: Kühler
- 24: Rücklauf
- 25: Ventilator
- 26: Kühlmittelpumpe
- 27: hydraulischer Leistungsabnehmer/ Antrieb

## Patentansprüche

1. Landwirtschaftliches Arbeitsgerät (10), welches zum Ankoppeln an ein landwirtschaftliches Trägerfahrzeug (11) oder Zugfahrzeug ausgebildet ist, mit mindestens einem hydraulischen Leistungsabnehmer (27), mit hydraulischen Anschlüssen (15), über welche der mindestens eine hydraulische Leistungsabnehmer (27) ausgehend vom Trägerfahrzeug (11) oder Zugfahrzeug mit Hydrauliköl versorgbar ist, mit einem Kühlsystem (16) zur Kühlung des Hydrauliköls, **dadurch gekennzeichnet, dass** zumindest ölführende Baugruppen des Kühlsystems (16) bis wenigstens 200 bar druckfest sind.

2. Landwirtschaftliches Arbeitsgerät (10) nach Anspruch 1, **dadurch gekennzeichnet, dass** das Kühlsystem (16) einen in einem Kühlmittelbehälter (18) angeordneten Rohrleitungswärmetauscher (17) aufweist, dessen mindestens eine von Öl durchströmte Rohrleitung (19) bis wenigstens 200 bar druckfest ist, und dessen mindestens eine von Öl durchströmte Rohrleitung (19) von Kühlmittel, welches den Kühlmittelbehälter (18) durchströmt, umströmt ist.

3. Landwirtschaftliches Arbeitsgerät (10) nach Anspruch 1 oder 2, **dadurch gekennzeichnet, dass** die mindestens eine Rohrleitung (19) des Rohrleitungswärmetauschers (17) wendelartig oder spiralartig ausgebildet ist.

4. Landwirtschaftliches Arbeitsgerät (10) nach einem der Ansprüche 1 bis 3, **dadurch gekennzeichnet, dass** sich durch mindestens eine Wand (18a) des Kühlmittelbehälters (18) mindestens ein Zulauf (20) für Öl und mindestens ein Ablauf (21) für Öl erstreckt, über den mindestens Zulauf (20) dem im Kühlmittelbehälter (18) angeordneten Rohrleitungswärmetauscher (17) zu kühlendes Öl zuführbar ist, über den mindestens Ablauf (21) von dem im Kühlmittelbehälter (18) angeordneten Rohrleitungswärmetauscher (17) gekühltes Öl abführbar ist.

5. Landwirtschaftliches Arbeitsgerät (10) nach einem der Ansprüche 1 bis 4, **dadurch gekennzeichnet, dass** das Kühlsystem einen Kühler (23) für das Kühlmittel aufweist, wobei über einen Vorlauf (22) Kühlmittel aus dem Kühlmittelbehälter (18) entnehmbar und dem Kühler (23) zuführbar ist, und wobei über einen Rücklauflauf (24) Kühlmittel ausgehend vom Kühler (23) dem Kühlmittelbehälter (18) zuführbar ist.

6. Landwirtschaftliches Arbeitsgerät (10) nach Anspruch 5, **dadurch gekennzeichnet, dass** der Kühler (23) ein Luftwärmetauscher ist, der das Kühlmittel gegen Umgebungsluft kühlt.

7. Landwirtschaftliches Arbeitsgerät (10) nach Anspruch 5 oder 6, **dadurch gekennzeichnet, dass** dem Kühler (23) einen Ventilator (25) zugeordnet ist, der Umgebungsluft durch den Kühler (23) fördert.

8. Landwirtschaftliches Arbeitsgerät (10) nach einem der Ansprüche 5 bis 7, **dadurch gekennzeichnet, dass** in den sich zwischen dem Kühlmittelbehälter (18) und dem Kühler (23) erstreckenden Vorlauf (22) eine Kühlmittelpumpe (26) integriert ist.

9. Landwirtschaftliches Arbeitsgerät (10) nach einem der Ansprüche 5 bis 8, **dadurch gekennzeichnet, dass** der Kühler (23) an einer Wand des Kühlmittelbehälters (18) montiert ist.

10. Landwirtschaftliche Arbeitsgerät (10) nach einem der Ansprüche 1 bis 9, **dadurch gekennzeichnet, dass** dasselbe ein Mähwerk mit mindestens einem als Bandförderer ausgebildeten Querförderer (13) für gemähtes Erntegut ist, wobei der jeweilige Querförderer (13) als hydraulischen Leistungsabnehmer (27) einen hydraulischen Antrieb aufweist.

## Claims

1. Agricultural working tool (10) which is constructed for coupling to an agricultural carrier vehicle (11) or towing vehicle, having at least one hydraulic power take-off member (27), having hydraulic connections (15), via which the at least one hydraulic power take-off member (27) can be supplied with hydraulic oil from the carrier vehicle (11) or towing vehicle, having a cooling system (16) for cooling the hydraulic oil, **characterized in that** at least oil-carrying sub-assemblies of the cooling system (16) are pressure-resistant up to at least 200 bar.

2. Agricultural working tool (10) according to Claim 1, **characterized in that** the cooling system (16) has a pipeline heat exchanger (17) which is arranged in a coolant container (18) and whose at least one pipeline (19) through which oil flows is pressure-resistant up to at least 200 bar and whose at least one pipeline (19) through which oil flows is flowed around by coolant which flows through the coolant container (18).

3. Agricultural working tool (10) according to Claim 1 or 2, **characterized in that** the at least one pipeline (19) of the pipeline heat exchanger (17) is constructed in a coil-like or helical manner.

4. Agricultural working tool (10) according to any one of Claims 1 to 3, **characterized in that** at least one supply (20) for oil and at least one discharge (21) for oil extends through at least one wall (18a) of the coolant container (18), via the at least one supply (20) oil which is intended to be cooled can be supplied to the pipeline heat exchanger (17) which is arranged in the coolant container (18), via the at least one discharge (21) oil which has been cooled by the pipeline heat exchanger (17) which is arranged in the coolant container (18) can be discharged.

5. Agricultural working tool (10) according to any one of Claims 1 to 4, **characterized in that** the cooling system has a cooler (23) for the coolant, wherein via an outgoing flow (22) coolant can be removed from the coolant container (18) and can be supplied to the cooler (23), and wherein via a return flow (24) coolant from the cooler (23) can be supplied to the coolant container (18).

6. Agricultural working tool (10) according to Claim 5, **characterized in that** the cooler (23) is an air heat exchanger which cools the coolant with respect to ambient air.

7. Agricultural working tool (10) according to Claim 5 or 6, **characterized in that** a fan (25) which conveys ambient air through the cooler (23) is associated with the cooler (23).

8. Agricultural working tool (10) according to any one of Claims 5 to 7, **characterized in that** a coolant pump (26) is integrated in the outgoing flow (22) which extends between the coolant container (18) and the cooler (23).

9. Agricultural working tool (10) according to any one of Claims 5 to 8, **characterized in that** the cooler (23) is mounted on a wall of the coolant container (18).

10. Agricultural working tool (10) according to any one of Claims 1 to 9, **characterized in that** the tool is a mower having at least one cross-conveyor (13) in the form of a belt conveyor for mown harvested material, wherein the respective cross-conveyor (13) has a hydraulic drive as a hydraulic power take-off member (27).

## Revendications

1. Outil agricole (10), qui est formé pour être accouplé à un véhicule porteur agricole (11) ou à un véhicule tracteur, avec au moins un consommateur de puissance hydraulique (27), avec des raccords hydrauliques (15), par lesquels l'au moins un consommateur de puissance hydraulique (27) peut être alimenté en huile hydraulique en partant du véhicule porteur (11) ou du véhicule tracteur, avec un système de refroidissement (16) pour refroidir l'huile hydraulique, **caractérisé en ce qu'**au moins des modules de guidage d'huile des systèmes de refroidissement (16) résistent à une pression allant jusqu'à au moins 200 bar.

2. Outil agricole (10) selon la revendication 1, **caractérisé en ce que** le système de refroidissement (16) comporte un échangeur de chaleur à conduits (17) disposé dans un contenant de réfrigérant (18), dont au moins un conduit (19) traversé par l'huile résiste à une pression allant jusqu'à au moins 200 bar, et autour au moins un conduit (19) duquel s'écoule du réfrigérant qui traverse le contenant de réfrigérant (18).

3. Outil agricole (10) selon la revendication 1 ou 2, **caractérisé en ce que** l'au moins un conduit (19) de l'échangeur de chaleur à conduits (17) est de forme hélicoïdale ou spiralée.

4. Outil agricole (10) selon l'une des revendications 1 à 3, **caractérisé en ce qu'**au moins une arrivée (20) pour l'huile et au moins une sortie (21) pour l'huile s'étendent à travers au moins une paroi (18a) du contenant de réfrigérant (18), de l'huile à refroidir peut être amenée à l'échangeur de chaleur à conduits (17) disposé dans le contenant de réfrigérant (18) par l'au moins une arrivée (20), de l'huile refroidie peut être évacuée de l'échangeur de chaleur à conduits (17) disposé dans le contenant de réfrigérant (18) par l'au moins une sortie (21).

5. Outil agricole (10) selon l'une des revendications 1 à 4, **caractérisé en ce que** le système de refroidissement comporte un refroidisseur (23) pour le réfrigérant, le réfrigérant pouvant être prélevé du contenant de réfrigérant (18) par une conduite d'alimentation (22) et être amené au refroidisseur (23), le réfrigérant pouvant être amené au contenant de réfrigérant (18) en partant du refroidisseur (23) par une conduite de retour (24).

6. Outil agricole (10) selon la revendication 5, **caractérisé en ce que** le refroidisseur (23) est un échangeur de chaleur à air qui refroidit le réfrigérant par rapport à l'air ambiant.

7. Outil agricole (10) selon la revendication 5 ou 6, **caractérisé en ce qu'**est associé au refroidisseur (23) un ventilateur (25), qui transporte l'air ambiant à travers le refroidisseur (23).

8. Outil agricole (10) selon l'une des revendications 5 à 7, **caractérisé en ce qu'**une pompe de réfrigérant (26) est intégrée dans la conduite d'alimentation (22) s'étendant entre le contenant de réfrigérant (18) et le refroidisseur (23).

9. Outil agricole (10) selon l'une des revendications 5 à 8, **caractérisé en ce que** le refroidisseur (23) est monté sur une paroi du contenant de réfrigérant (18).

10. Outil agricole (10) selon l'une des revendications 1 à 9, **caractérisé en ce que** celui-ci est une barre de coupe avec au moins un convoyeur transversal (13) formé comme un convoyeur à bande pour la récolte coupée, le convoyeur transversal (13) respectif comportant un entraînement hydraulique en tant que consommateur de puissance hydraulique (27).
